(19) Europäisches Patentamt
European Patent Office
Office européen des brevets

(11) Numéro de publication: **0 204 641**
**B1**

(12) **FASCICULE DE BREVET EUROPÉEN**

(45) Date de publication du fascicule du brevet: **31.05.89**

(51) Int. Cl.⁴: **C 08 L 83/04** // (C08L23/04, C08K5:20, 5:54)

(21) Numéro de dépôt: **86420112.4**

(22) Date de dépôt: **30.04.86**

(54) **Compositions organopolysiloxaniques contenant des polyacyloxysilanes et durcissant très rapidement à la chaleur en élastomères en présence d'accélérateur à groupement carboxy-2 carboxamide.**

(30) Priorité: **03.05.85 FR 8506735**

(43) Date de publication de la demande: **10.12.86 Bulletin 86/50**

(45) Mention de la délivrance du brevet: **31.05.89 Bulletin 89/22**

(84) Etats contractants désignés: **AT BE CH DE FR GB IT LI LU NL SE**

(56) Documents cité:
**EP-A-0 043 501**
**US-A-3 240 731**
**US-A-4 460 740**

(73) Titulaire: **RHONE- POULENC CHIMIE, 25, quai Paul Doumer, F-92408 Courbevoie Cédex (FR)**

(72) Inventeur: **Letoffe, Michel, 5, Avenue de Limburg, F-69110 Sainte- Foy- Les- Lyon (FR)**

(74) Mandataire: **Seugnet, Jean Louis, RHONE- POULENC INTERSERVICES Service Brevets Chimie Centre de Recherches de Saint- Fons B.P. 62, F-69192 Saint- Fons Cédex (FR)**

Il est rappelé que: Dans un délai de neuf mois à compter de la date de publication de la mention de la délivrance du brevet europeen toute personne peut faire opposition au brevet européen délivré, auprés de l'Office européen des brevets. L'opposition doit être formée par écrit et motivée. Elle n'est réputée formée qu'après paiement de la taxe d'opposition (Art. 99(1) Convention sur le brevet européen).

EP 0 204 641 B1

LIBER, STOCKHOLM 1989

## Description

La présente invention concerne des compositions organopolysiloxaniques contenant des polyacyloxysilanes et durcissant très rapidement à la chaleur en présence d'accélarateur à groupement carboxy-2 carboxamide.

Les compositions de l'invention font partie de la famille des compositions élastomériques de silicone à durcissement auto-accélérées.

Ces compositions auto-accélérées connues sont pour la plupart bicomposantes (à deux emballages).

Ces compositions, à l'opposé des compositions monocomposantes connues durcissant à l'humidité de l'air et portant également des radicaux acyloxy liés à des atomes de silicium (décrites notamment dans les brevets français 1 198 749, 1 220 348, 2 429 811 et la demande de brevet européen EP-A-102 505 ne sont pas stables au stockage mais leur durée de réticulation est beaucoup plus courte, par exemple de l'ordre de quelques minutes, jusqu'à 60 minutes. Ces compositions auto-accélérées connues doivent donc être préparées extemporanément.

Les compositions du type ci-dessus à durée de réticulation rapide, cette réticulation étant indépendante du taux d'humidité de l'atmosphère environnante, sont utilisées dans des domaines d'application ou cette propriete est particulièrement intéressante comme par exemple la fabrication de joints "in situ" dans l'industrie automobile. Des compositions du type ci-dessus, portant des radicaux acyloxy liés à des atomes de silicium, dont la durée de réticulation est indépendante de l'humidité de l'air ambiant, sont connues par le brevet français FR-A-1 193 721 où l'accélérateur est l'oxyde de zinc et par le brevet britannique GB-A-1 308 985, ce brevet décrivant un procédé de durcissement consistant à ajouter aux compositions 3 à 15 % d'un accélérateur de durcissement constitué par un silico-aluminate avant de 5 à 10 % en poids d'eau absorbée en vue de fabriquer des pièces moulées en élastomère silicone par injection basse pression.

Dans les demandes de brevet européen EP-A-118 325 et EP-A-117 772, on décrit également des compositions de ce type mais dont l'accélérateur de durcissement est respectivement choisi parmi un hydroxyde alcalin et alcalino-terreux ou bien par un mélange constitué par de l'eau et un phosphate et/ou un, polyphosphate alcalin ou alcalino-terreux.

Les accélérateurs décrits dans ces deux demandes de brevet français ont permis d'opérer, par rapport à l'enseignement de FR-A-1 193 721 et de GB-A-1 308 985 un progrès très important en ce sens que, d'une part, la nature et les quantités d'accélérateurs introduites n'altèrent pas les propriétés mécaniques de l'élastomère obtenu, en particulier au niveau de la déformation rémanente à la compression (DRC) et, d'autre part, ces accélérateurs ont donné la possibilité d'utiliser les compositions de ce type pour le collage ou le jointement de pièces circulant sur des chaînes industrielles de montage ou pour lesquelles il n'existe pas d'aires de stockage disponibles qui assureraient leur durcissement complet.

Toutefois les compositions décrites dans ces brevets ne peuvent être à un seul emballage (compositions monocomposantes) et doivent être conditionnées en 2 composantes généralement, d'une part, la composante organopolysiloxanique et, d'autre part, l'accélérateur car le mélange de ces deux composantes doit se faire extemporanément c'est-à-dire au moment de l'emploi.

Cette façon de procéder présente des inconvénients. Tout d'abord il existe bien entendu un risque qu'au moment de l'emploi le dosage respectif des deux composantes ne soit pas fait correctement. En outre, dans le cas notamment de la fabrication automatique des joints "en forme" ou "in situ", le mélange se fait dans un appareil automatique compliqué et coûteux de dépose des compositions possédant une tête mélangeuse recevant la composition polysiloxanique et l'accélérateur. Il est alors nécessaire que les compositions utilisées dans cet appareil présentent une durée de durcissement bien ajustée pour éviter des prises en masses dans la tête mélangeuse ce qui nécessite une mise au point longue et délicate. Par ailleurs, il est nécessaire de vidanger ces têtes mélangeuses lors de l'arrêt ou d'une panne de l'appareil pour éviter une prise en masse.

Dans la demande de brevet français FR-A-2 553 784, on a proposé une solution permettant d'obtenir des compositions autoaccélérées monocomposantes stables au stockage à température ambiante en absence d'humidité de l'air en microencapsulant l'accélérateur. Cette microencapsulation est tout à fait efficace, mais augmente le coût des compositions provoqué par l'étape supplémentaire de microencapsulation.

La présente invention a pour but de proposer une composition organopolysiloxane pouvant être monocomposante et ne présentant pas les inconvénients mentionnés ci-dessus. La présente invention a également pour but de proposer un nouvel accélérateur de durcissement qui, incorporé dans les compositions organopolysiloxaniques, ne provoque pas le durcissement des compositions à température ambiante en absence d'humidité de l'air, mais accélére efficacement le durcissement des compositions par apport d'énergie en particulier, par exposition à la chaleur.

Ces buts et d'autres sont atteints par la présente invention qui concerne en effet une composition organopolysiloxane pouvant réticuler en élastomère caractérisé en ce qu'elle comporte un polysiloxane polyhydroxylé A, un polyacyloxysilane B et une quantité efficace d'un accélérateur de durcissement C, choisi parmi au moins un composé organique présentant au moins un groupement carboxy-2 carboxamide éventuellement salifié par un cation métallique, de préférence alcalin ou alcalino-terreux.

Plus précisément l'accélérateur C répond à la formule générale (I) ci-dessous.

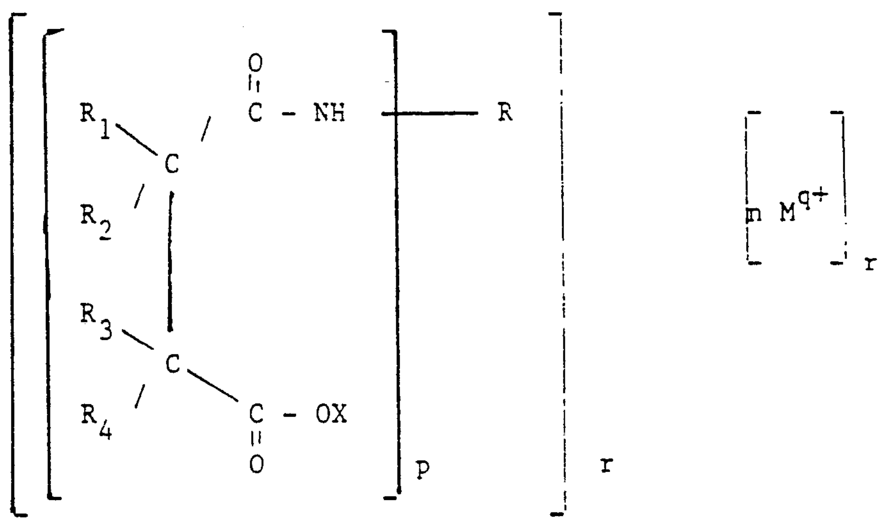

dans laquelle les divers symboles représentent:

- $R_1$, $R_2$, $R_3$, $R_4$: un atome d'hydrogène, un atome d'halogène, un groupement alkyle ou halogénoalkyle, alkoxyle, alkoxycarbonyle, hydroxyle, carbamoyle, ou carboxamide; les groupements $R_1$ et/ou $R_2$ pouvant constituer avec les groupements $R_3$ et/ou $R_4$ un lien valentiel et/ou un groupement divalent constituant avec les deux atomes de carbone auxquels sont attachés les groupements $R_1$ (ou $R_2$) et $R_3$ (ou $R_4$) un groupement (L) pouvant comporter éventuellement un autre groupement carboxy-2 carboxamide, le groupement (L) étant cyclique ou polycyclique ou bien encore constitué par un ensemble de plusieurs groupements cycliques reliés entre eux par le lien valentiel, un hétéroatome, un groupement méthylène ou carboxyle,
- r: un nombre entier égal à 1 ou 2,
- p : un nombre entier égal à 1 ou 2 et représentant le nombre de valence du symbole R,
- R: le lien valentiel ou l'un des radicaux suivants:

a) un radical monovalent constitué par un atome d'hydrogène; un groupement $-CONHR_5$; $-CSNHR_5$, $R_5$ étant un atome d'hydrogène ou un radical alkyle; un radical hydrocarboné aliphatique, cycloaliphatique saturé ou insaturé; un radical aromatique; ces divers radicaux étant éventuellement substitués par des groupements alkyles eux mêmes éventuellement halogénés, par des atomes d'halogène, par des groupements carboxyliques ou nitrés ou encore par des groupements urée, thiourée ou hydroxyle,

b) un radical divalent alkylène, cycloalkylène, phénylène ou un ensemble de groupements alkylène ou phénylène reliés entre eux par un hétéroatome ou un groupement

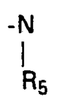

$R_5$ représentant un atome d'hydrogène ou un groupement alkyle,

- M : un cation de valence q, de préférence alcalin ou alcalino-terreux,
- n : un nombre entier égal à 0, 1 ou 2 et telle que la charge ionique globale de l'accélérateur soit nulle (n x q = p), si n = 0, X représente l'atome d'hydrogène et si n est différent de 0, X représente une charge négative.

L'accélérateur peut être de préférence, un dérivé d'un acide phtalamique, d'un acide maléamique, ou d'un acide succinamique ou d'un acide polyhydrophtalique. De manière évidente, ces divers accélérateurs peuvent être mélangés entre eux et peuvent d'ailleurs comporter tout substituant n'ayant pas d'effet défavorable sur les propriétés physico-chimiques de l'élastomère durci. Ces divers substituants pourront être portés par les groupements (L) ou (R).

Préférentiellement dans la formule (I) les divers symboles représentent:

- $R_1$, $R_2$, $R_3$, $R_4$: un atome d'hydrogène, un atome de chlore, un groupement alkyle ou alkoxyle ayant de 1 à 4 atomes de carbone deux des groupements $R_1$, $R_2$, $R_3$, $R_4$ étant constitués par des atomes d'hydrogène, les groupements $R_1$ et/ou $R_2$, pouvant constituer avec les groupements $R_3$ et/ou $R_4$ un lien valentiel et/ou un groupement divalent constituant avec les deux atomes de carbone auxquels ils sont attachés les groupements $R_1$ (ou $R_2$) et $R_3$ (ou $R_4$) un groupement (L) pouvant comporter un autre groupement carboxy-2 carboxamide, le groupement (L) étant choisi parmi les groupements cycliques ou polycycliques suivants:
- un radical cycloaliphatique saturé ou non ayant de 4 à 6 atomes de carbone nucléaire et éventuellement substitué par des groupements alkyle, des atomes d'halogène, des groupements COOH ou $NO_2$,
- un radical phényle ou naphtalénique éventuellement substitué par des groupements alkyle, des atomes d'halogène, des groupements COOH ou $NO_2$,
- un groupement hétérocyclique saturé, ou insaturé ou aromatique ayant 4 à 6 atomes dans le cycle dont un

hétéroatome,

- un radical polycyclique, cycloaliphatique saturé ou insaturé, ou hétérocyclique et comportant de 4 à 11 atomes,
- un ensemble de deux groupements cycloaliphatiques saturés ou insaturés et ayant de 4 à 6 atomes de carbone nucléaire, ou phényle et reliés entre eux par un lien valentiel, un atome d'oxygène, un groupement NH ou un groupement carbonyle,
- R: le lien valentiel ou l'un des radicaux suivants:

a) un radical monovalent constitué par un atome d'hydrogène, un groupement $-CONH_2$ ou $CSNH_2$; un radical alkyle ou alkényle ayant de 1 à 4 atomes de carbone et éventuellement substitué par des atomes d'halogène; un radical phényle pouvant être substitué par des atomes d'halogène ou par des radicaux alkyles eux-mêmes éventuellement halogénés; un radical cyclohexyle ou cyclopentyle,

b) un radical divalent: alkylène ayant au plus 6 atomes de carbone, cyclohexylène, cyclopentylène, phénylène, un ensemble de 2 à 10 groupements alkylène ayant au plus 6 atomes de carbone, ou phénylène et reliés entre eux par -O-, -NH-,

-N
|
$CH_3$

- M un cation alcalin ou alcalino-terreux ou tétraalkylammonium quaternaire, chaque groupement alkyle ayant de 1 à 8 atomes de carbone.

De façon plus particulièrement avantageuse l'accélérateur de la présente invention répond à la formule (I) dans laquelle les divers symboles représentent:

- $R_1$, $R_2$, $R_3$, $R_4$: un atome d'hydrogène, un atome de chlore, un groupement méthyle ou méthoxyle, deux des groupements $R_1$, $R_2$, $R_3$ et $R_4$ étant constitués par des atomes d'hydrogène; les groupements $R_1$ et/ou $R_2$ pouvant constituer avec les groupements $R_3$ et/ou $R_4$ un lien valentiel et/ou un groupement divalent constituant avec les deux atomes de carbone auxquels sont attachés les groupements $R_1$ (ou $R_2$) et $R_3$ (ou $R_4$) un groupement (L) pouvant comporter un groupement carboxy-2 carboxamide, le groupement (L) étant choisi parmi les groupements cycliques ou polycycliques suivants:
- un radical cycloaliphatique saturé ou non ayant de 4 à 6 atomes de carbone nucléaire et éventuellement susbtitué par un radical méthyle, des atomes de chlore, des groupements COOH ou $NO_2$,
- un groupement phényle éventuellement substitué par un radical méthyle, des atomes de chlore, des groupements COOH ou $NO_2$,
- un groupement hétérocyclique saturé ou insaturé ayant 4 à 6 atomes dans le cycle dont un hétéroatome d'oxygène ou d'azote,
- un radical polycyclique, cycloaliphatique saturé ou insaturé ou hétérocyclique ayant de 4 à 11 atomes dont éventuellement un hétéroatome d'oxygène ou d'azote,
- un ensemble de deux groupements phényles reliés entre eux par un lien valentiel, un atome d'oxygène, un groupement NH ou un groupement carbonyle,

R: le lien valentiel ou l'un des radicaux suivants:

a) un radical monovalent constitué, par un atome d'hydrogène, un groupement $CONH_2$, un radical alkyle ayant de 1 à 4 atomes de carbone; un radical phényle éventuellement substitué par des atomes d'halogène ou par des radicaux méthyles eux-mêmes éventuellement halogénés ; un radical cyclohexyle ou cyclopentyle,

b) un radical divalent alkylène ayant au plus 6 atomes de carbone, cyclopentylène, cyclohexylène, phénylène, un ensemble de 2 à 5 groupements alkylène ayant au plus 6 atomes de carbone et reliés entre eux par un atome d'oxygène, un groupement -NH- ou

-N
|
$CH_3$

Enfin parmi l'ensemble des composés à groupements carboxy-2 carboxamide présentés de manière générale ou à titre préférentiel et avantageux, on mentionnera tout particulièrement les sels de calcium, de lithium, de baryum et de strontium.

Comme on l'a déjà dit les accélérateurs selon l'invention sont de préférence des dérivés d'acides phtalamiques, ou polyhydrophtalamiques, succinamiques ou maléamiques. Ces divers composés peuvent par ailleurs être représentés par l'une des formules suivantes, selon la valence de R et la valence du cation M,

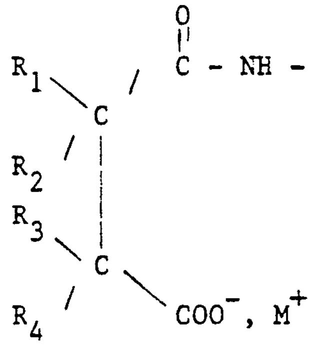

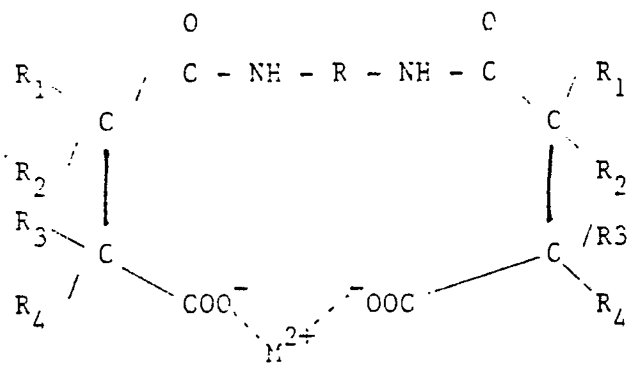

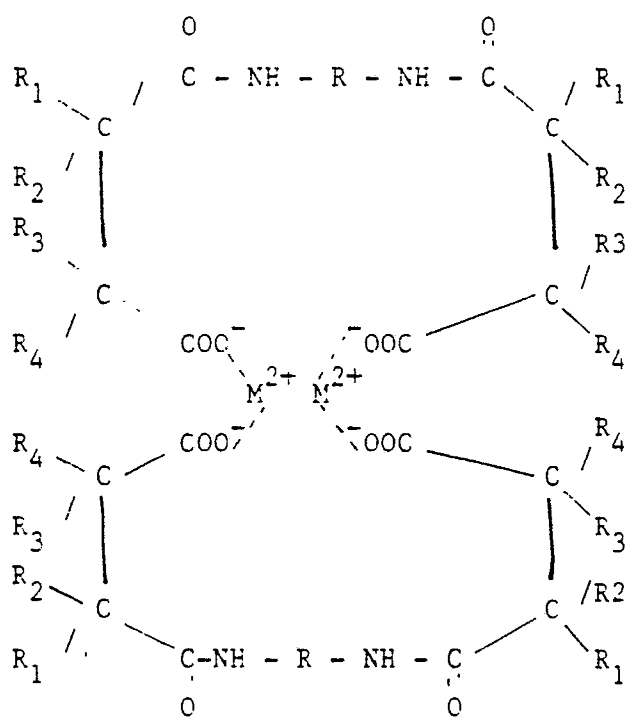

Les accélérateurs qui conviennent particulièrement sont l'acide N, N' éthylène bis maléamique et son sel de calcium, l'acide N, N'-éthylène bis succinamique et son sel de calcium anhydre ou monohydraté.

Les divers accélérateurs utilisables dans le cadre de la présente invention peuvent être préparés aisement selon les techniques de l'art antérieur par exemple par action des composés aminés correspondants sur les anhydrides d'acides puis salification. A cet effet, on pourra se reporter à l'article de Journal of Chemical Society 127 p. 1791 (1925).

On notera également que la nature même des divers substituants implique non seulement l'utilisation de £ diacides, mais également de tri ou tétraacides. Ainsi à partir de bis £ diacides tels que l'acide cyclopentane tétracarboxylique-1, 2, 4, 5, on accède par exemple directement à un accélérateur ayant 2 groupements

carboxy-2 carboxamides.

Les accélérateurs selon l'invention peuvent être formés d'un mélange de composès du type carboxy-2 carboxamide de formule I dont les groupements carboxyliques sont libres ou salifiés. Il est évident que de tels mélanges peuvent être obtenus directement lors de la préparation des acélérateurs selon l'invention.

Les divers diacides (ou polyacides) utilisables pour préparer les accélérateurs peuvent être des acides succiniques, maléamiques, phtaliques, dihydrophtaliques, tétrahydrophtaliques ou hexahydrophtaliques ou bien encore des diacides polycycliques éventuelles hétérocycliques tels que les dérivés des bicyclo(2,2,2) octane, des bicyclo(2,2,1) heptane, de l'aza-7 bicyclo(2,2,1) heptane, de l'oxa-7 bicyclo(2,2,1) heptane. Ces divers acides qui peuvent comporter divers substituants dont un autre groupement carboxy-2 carboxamide et qui ont été préalablement définis, sont par exemple décrits dans la littérature et en particulier dans les traités chimiques de base ou également dans:

Rodd's chemistry of carbon compounds second edition:

- vol I part D Chapter 17: aliphatic dicarboxylic acids,
- vol II part A and B: alicyclic compounds,
- vol III part E: phtalic acids,
- vol IV part A and F: heterocyclic compounds ou bien dans l'encyclopédie bien connue:

Beilsteins Handbuch der organischen Chemie.

A titre purement illustratif on citera parmi les diacides (ou leurs anhydrides) ou parmi les polyacides utilisables les composés suivants:

- l'acide succinique
  . l'acide méthylsuccinique
  . l'acide α, α diméthylsuccinique,
  . l'acide α, α' diéthylsuccinique
  . l'acide triméthylsuccinique
  . l'acide tétraméthylsuccinique
  . l'acide monochlorosuccinique
  . l'acide monofluorosuccinique
  . l'acide α, α' difluorosuccinique
  . l'acide α, α' dichlorosuccinique
  . l'acide trifluorosuccinique
  . l'acide tétrafluorosuccinique
  . l'acide α nitro-succinique

- l'acide maléique
  . l'acide diméthylmaléique
  . l'acide itaconique
  . l'acide citraconique
  . l'acide aticonique
  . l'acide méthylitaconique
  . l'acide chloromaléique ou l'acide dichloromaléique

- l'acide cyclobutane dicarboxylique -1,2
  . l'acide dichloro-3,4 cyclobutane dicarboxylique-1,2
  . l'acide dibromo-3,4 cyclobutane dicarboxylique-1,2
  . l'acide cyclopentane dicarboxylique-1,2
  . les acides méthylcyclopentane dicarboxylique-1,2
  . l'acide cyclopentane tétracarboxylique-1,2,4,5
  . les acides dihydrophtaliques, tétrahydrophtaliques ou hexahydrophtaliques
  . l'acide méthyl-4 hexahydrophtalique

- les diacides polycycliques tels que
  . l'acide bicyclo(2,2,1) heptane dicarboxylique-2,3
  . l'acide bicyclo(3,2,2) nonène-6, dione-2,3, dicarboxylique-8,9
  . l'acide bicyclo(2,2,2) octène-5, dicarboxylique-1,2
  . l'acide bicyclo(2,2,2) octane dicarboxylique-1,2
  . l'acide bicyclo(2,2,2) octène-7 tétracarboxylique 2, 3, 5, 6
  . l'acide tricyclo(4,2,2,$0^{2,5}$) décadiène-3,7 dicarboxylique-9,10

- les acides phtaliques:
  . l'acide ortho-phtalique
  . l'acide chloro-3 phtalique
  . l'acide chloro-4 phtalique
  . l'acide méthoxy-3 phtalique
  . l'acide diméthoxy-3,5 phtalique

. l'acide diméthyl-3,6 phtalique
. l'acide nitro-4 phtalique
. l'acide tétrachloro-3,4,5,6 phtalique
. l'acide carboxy-4 phtalique
. l'acide benzophénone tétracarboxylique-3,4,3',4'

- les acides hétyérocycliques suivants:
. l'acide furane tricarboxylique-2,3,5
. l'acide benzofurane dicarboxylique-2,3
. l'acide pyridine dicarboxylique-3,4

- les diacides polycycliques hétérocycliques tels que:
. l'acide oxa-7 bicyclo(2,2,1) heptène-5 dicarboxylique-2,3

Parmi les diverses monoamines ou polyamines utilisables pour préparer les divers accélérateurs on citera l'ammoniac, l'hydrazine, les monoamines primaires aliphatiques, cycloaliphatiques, ou aromatiques, les diamines primaires aliphatiques ou aromatiques, les polyamines renfermant éventuellement des hétéroatomes tels que les polyamines de formule: $NH_2-[(CH_2)_{m'}-NH]_m-H$ ou $NH_2-[(CH_2)_{m'}-O]_{m-1}-(CH_2)_{m'}-NH_2$, m' étant un nombre entier compris entre 2 et 6.

A titre illustratif, on citera en particulier: l'ammoniac, la butylamine, la cyclohexylamine, l'hydrazine, l'aniline, la chloroaniline, la trifluorométhylaniline, la toluidine, la xylidine, le diamino-4,4' diphénylméthane, le diamino-4,4' diphényléther, l'éthylène-diamine, l'hexaméthylène diamine, la cyclohexylène diamine ...

Enfin, on pourrait citer à titre illustratif parmi les divers accélérateurs utilisables selon l'invention les composés de formule (I) dans laquelle les divers symboles correspondent exactement aux substituants portés par l'anhydride d'acide (ou le diacide ou polyacide) et l'amine (ou la diamine) ayant servi à les préparer et qui viennent d'être nommément cités. Parmi ceux-ci, on citera évidemment tout particulièrement les sels sodiques, potassiques et de calcium, des acides-N,N', polyméthylène bis phtalamique; -N-N', polyméthylène bis hexahydrophtalamique; -N,N' polyméthylène bis succinamique; -N,N' polyméthylène bis maléamique. L'accélérateur selon l'invention, en particulier sous sa forme salifiée peut contenir dans sa molécule, de l'eau de constitution sous la forme d'un sel mono ou polyhydraté. Cette eau de constitution abaisse la stabilité au stockage à température ambiante des compositions monocomposantes généralement à moins d'un mois.

Sans pour cela limiter l'invention à une explication théorique, il apparaît que par apport d'énergie, en particulier de chaleur l'accélérateur selon l'invention dans le cas d'un acide libre engendre de l'eau par déshydratation intramoléculaire selon la reaction:

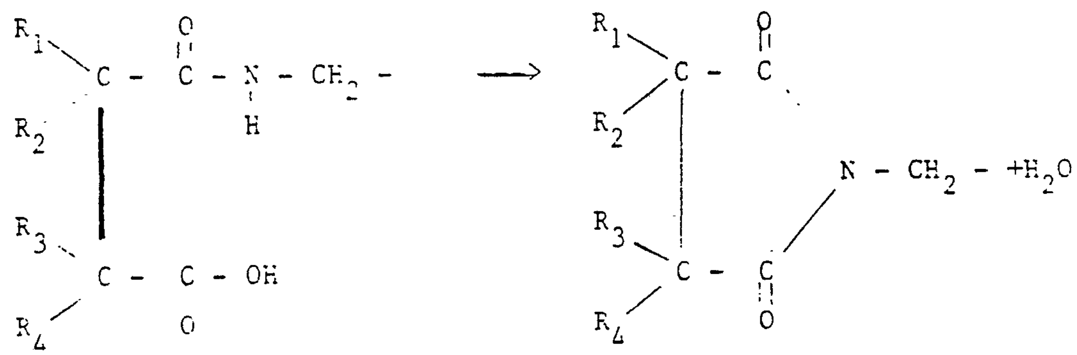

et, dans le cas d'un sel engendre l'hydroxyde du cation métallique M correspondant.

Cette eau et/ou cet hydroxyde formé hydrolyse les polyacyloxysilanes et accélère donc la réticulation de la composition organopolysiloxane. En outre dans le cas de formation d'hydroxyde du cation M, cet hydroxyde neutralisé l'acide provenant de l'hydrolyse du polyacyloxysilane en engendrant de l'eau.

Par conséquent, pour réticuler les compositions organopolysiloxane selon l'invention il suffit d'apporter de l'énergie aux dites compositions, sous une forme et en quantité adaptées pour engendrer ladite eau de déshydratation et/ou ledit hydroxyde du cation M provenant de la dégradation de l'accélérateur.

La composition selon l'invention peut comporter en outre de 1 à 150 parties d'une charge minérale D pour 100 parties de constituant A.

Plus spécifiquement la présente invention a pour objet une composition organopolysiloxanique pouvant réticuler en élastomère, comprenant au moins:

- 100 parties de polymères A principalement α - ω di(hydroxy)diorganopolysiloxaniques, de viscosite 700 à 1 000 000 mPa.s à 25°C, constitués chacun d'une succession de motifs diorganosiloxy de formule $R_2SiO$ dans laquelle les symboles R, identiques ou différents, représentent des radicaux hydrocarbonés ayant de 1 à 8 atomes de carbone, substitués ou non par des atomes d'halogènes, de groupes cyano.
- 2 à 20 parties d'agents réticulants B de formule générale $R_pSi(OCOR')_{4-p}$ dans laquelle le symbole R a la signification donnée sous (A), le symbole R', représente un radical hydrocarboné exempt

d'insaturation aliphatique, ayant de 1 à 15 atomes de carbone et le symbole p représente zéro ou un.
- 0,01 à 30, de préférence 0,5 à 15 parties, pour 100 parties de A + B + C, d'accélérateur de durcissement C.

Les polymères A de viscosité 700 à 1 000 000 mPa.s à 25°C, de préférence 1 000 à 700 000 mPa.s à 25°C, sont des polymères essentiellement linéaires, constitués de motifs diorganosiloxy de formule précitée $R_2SiO$, et bloqués à chaque extrémité de leur chaîne par un groupe hydroxyle; toutefois la présence de motifs monoorganosiloxy de formule $RSiO_{1,5}$ et/ou de motifs siloxy de formule $SiO_2$, n'est pas exclue dans la proportion d'au plus 2 % par rapport au nombre de motifs diorganosiloxy.

Les radicaux hydrocarbonés, ayant de 1 à 8 atomes de carbone, substitués ou non par des atomes d'halogènes ou des groupes cyano, et représentés par les symboles R, peuvent être choisis parmi:

- les radicaux alcoyles et halogénoalcoyles ayant de 1 à 8 atomes de carbone tels que les radicaux méthyles, éthyles, n-propyles, isopropyles, n-butyles, n-pentyles, n-hexyles, éthyl-2 hexyles, n-octyles, trifluoro-3,3,3 propyles, trifluoro-4,4,4 butyles, pentafluoro-4,4,4,3,3 butyles,
- les radicaux cycloalcoyles et halogénocycloalcoyles ayant de 4 à 8 atomes de carbone tels que les radicaux cyclopentyles, cyclohexyles, méthylcyclohexyl difluoro-2,3 cyclobutyles, difluoro-3,4 méthyl-5 cycloheptyles,
- les radicaux alcényles ayant de 2 à 4 atomes de carbone tels que les radicaux vinyles, allyles, butène-2 yles,
- les radicaux aryles et halogénoaryles ayant de 6 à 8 atomes de carbone tels que les radicaux phényles, tolyles, xylyles, chlorophényles, dichlorophényles, trichlorophényles,
- les radicaux cyanoalcoyles dont les chaînons alcoyles ont de 2 à 3 atomes de carbone tels que les radicaux β-cyanoéthyle et γ-cyanopropyles.

A titre d'exemple de motifs représentés par la formule $R_2SiO$ on peut citer ceux de formules:

$(CH_3)_2SiO$
$CH_3(CH_2{=}CH)SiO$
$CH_3(C_6H_5)SiO$
$(C_6H_5)_2SiO$
$CF_3CH_2CH_2(CH_3)SiO$
$NC\text{-}CH_2CH_2(CH_3)SiO$
$NC\text{-}CH(CH_3)CH_2(CH_2{=}CH)SiO$
$NC\text{-}CH_2CH_2CH_2(C_6H_5)\ SiO$

Il doit être compris, selon une variante de l'invention, que l'on peut utiliser comme polymères (A) des copolymères ou un mélange constitué de polymères; α-ω-di(hydroxy)diorganopolysiloxaniques qui diffèrent entre eux par le poids moléculaire et/ou la nature des groupements liés aux atomes de silicium.

Ces copolymères α-ω-di(hydroxy)diorganopolysiloxaniques (A) sont commercialisés; en outre, ils peuvent être aisément fabriqués. L'une des techniques de fabrication les plus courantes consiste, dans une première phase, à polymériser des diorganocyclopolysiloxanes à l'aide de quantités catalytiques d'agents alcalins ou acides puis à traiter les polymérisats avec des quantités calculées d'eau (brevets français 1 134 005, 1 198 749, 1 226 745); cet apport d'eau, qui est d'autant plus élevé que les polymères à préparer ont une viscosité plus faible, peut être remplacé en totalité ou en partie par des huiles α-ω di(hydroxy)diorganopolysiloxaniques de faible viscosité, par exemple allant de 5 à 200 mPa.s à 25°C, ayant un taux élevé de radicaux hydroxyles, par exemple de 3 à 14 %.

Les agents réticulants (B) sont employés à raison de 2 à 20 parties de préférence de 3 à 15 parties, pour 100 parties des polym*eres α-ω di(hydroxy)diorganopolysiloxaniques (A).

Ils répondent à la formule précitée $R_pSi(OCOR')_{4-p}$ dans laquelle, comme déjà indiqué, le symbole R a la signification donnée sous (A), le symbole R' représente un radical hydrocarboné exempt d'insaturation aliphatique ayant de 1 à 15 atomes de carbone et le symbole p représente zéro ou 1.

Des précisions ont été déjà fournies sur la nature des radicaux représentés par le symbole R. Quant au symbole R' il représente un radical choisi dans le groupe constitué:

- des radicaux alcoyles ayant de 1 à 15 atomes de carbone tels que les radicaux méthyles, éthyles, n-propyles, n-butyles, n-pentyles, éthyl-1 pentyles, n-hexyles, éthyl-2 hexyle, n-octyles, néodécyles, n-décyles, n-dodécyles, n-pentadécyles,
- des radicaux cycloalcoyles ayant de 5 à 6 atomes de carbone nucléaire tels que les radicaux cyclopentyles et cyclohexyles,
- des radicaux aryles ayant de 6 à 8 atomes de carbone tels que les radicaux phényles, tolyles, xylyles.

A titre d'exemples d'agents réticulants (B) peuvent être cités ceux répondant aux formules suivantes:

$CH_3Si(OCOCH_3)_3$
$C_2H_5Si\text{-}(OCOCH_3)_3$
$CH_2{=}CHSi(OCOCH_3)_3$
$C_6H_5Si\text{-}(OCOCH_3)_3$

$CH_3Si[OCOCH(C_2H_5)(CH_2)_3\text{-}CH_3]_3$
$CF_3CH_2CH_2Si(OCOC_6H_5)_3$
$CH_3Si(OCOC_6H_5)_3$

$CH_3Si(OCOCH_3)_2(OCO\,CH\text{-}(CH_2)_3CH_3$
|
$C_2H_5$

$CH_3COOSi\{OCOCH\text{-}(CH_2)_3CH_3\}_3$
|
$C_2H_5$

Il est clair que l'on peut remplacer dans les compositions de l'invention les constituants A et B par les produits dévolatilisés provenant de la réaction stoechiométrique de A sur B conformément au procédé décrit dans le brevet français 1 220 348.

Avec ces agents réticulants (B) peuvent être associés des silanes portant seulement chacun deux groupes hydrolysables; ces silanes répondent à la formule:

$R''_2Si(OCOR')_2$

dans laquelle les symboles R' ont la signification du symbole R' de la formule:

$R_pSi(OCOR')_{4\text{-}p}$

et les symboles R" ont la signification du symbole R de cette même formule ou représente un radical tertiobutoxy de formule $(CH_3)_3C\text{-}O\text{-}$.

A titre d'exemples de ces silanes, peuvent être cités ceux de formules ci-après:

$(CH_3)_2Si(OCOCH_3)_2$
$CH_2{=}CH(CH_3)Si(OCOCH_3)_2$
$(C_6H_5)_2Si(OCOCH_3)_2$
$[(CH_3)_3C\text{-}O]_2Si(OCOCH_3)_2$
$(CH_3)_2Si[OCOCH(C_2H_5)(CH_2)_3CH_3]_2$
$[(CH_3)_3CO]_2Si[OCOCH(C_2H_5)(CH_2)_3CH_3]_2$

La quantité molaire mise en oeuvre des silanes de formule:

$R''_2Si(OCOR')_2$

par rapport à celle mise en oeuvre des silanes réticulants (B) de formule:

$R_pSi(OCOR')_{4\text{-}p}$

n'est pas étroitement définie, il est nécessaire cependant qu'elle ait une limite supérieure de manière que le mélange des deux types de silanes renferme toujours en moyenne au moins 2,5 groupes -OCOR' pour un atome de silicium.

Ainsi en prenant par exemple 1 mole du silane réticulant (B) de formule $RSi(OCOR')_3$ (avec $p = 1$), il faut lui associer au plus 1 mole du silane $R''_2Si(OCOR')_2$; de même en prenant 1 mole du silane réticulant (B) de formule $Si(OCOR')_4$ (avec $p = 0$) il faut lui associer au plus 3 moles de silane $R''_2Si(OCOR')_2$.

Le rôle principal des silanes de formule $R''_2Si(OCOR')_2$ est celui de coupler les chaînes des polymères $\alpha$ - $\omega$ di(hydroxy)diorganopolysiloxaniques (A) ce qui permet d'obtenir des élastomères ayant de bonnes caractéristiques physiques en partant de compositions renfermant des polymères (A) dont la viscosité est relativement faible, par exemple allant de 700 à 5 000 mPa.s à 25°C.

Les compositions selon l'invention peuvent contenir en outre de 1 à 150 parties, de préférence 5 à 120 parties, pour 100 parties des polymères $\alpha$ - $\omega$ di(hydroxy)diorganopolysiloxaniques (A) de charges minérales (D). Ces charges peuvent se présenter sous la forme de produits très finement divisés dont le diamètre particulaire moyen est inférieur à 0,1 µm. Parmi ces charges (D) figurent les silices de combustion et les silices de précipitation; leur surface spécifique est généralement supérieure à 40 $m^2/g$, et se situe le plus souvent dans l'intervalle 150 - 200 $m^2/g$.

Les compositions organopolysiloxaniques conformes à l'invention, peuvent comporter en outre mais non nécessairement, en dehors des constituants A, B, C, D, des catalyseurs de durcissement habituellement choisis dans le groupe constitué par:

- des sels métalliques d'acides carboxyliques, de préférence des sels d'organoétains d'acides carboxyliques tels que le diacétate et le dilaurate de dibutylétain,
- des produits de réaction des sels d'organoétains d'acides carboxyliques avec les esters titaniques (brevet américain 3 409 753),

- des dérivés organiques du titane et du zirconium tels que les esters titaniques et zirconiques (EP-A-102 268).

Ces catalyseurs de durcissement sont utilisés habituellement à raison de 0,0004 à 6 parties, de préférence de 0,0005 à 5 parties pour 100 parties des polymères $\alpha$ - $\omega$ di(hydroxy)diorganopolysiloxaniques (A).

Les compositions organopolysiloxaniques peuvent comporter également des adjuvants et additifs usuels, comprenant en particulier des stabilisants thermiques. Ces derniers produits, qui, par leur présence, améliorent la résistance thermique des élastomères silicones, peuvent être choisis parmi les sels, oxydes et hvdroxydes de terres rares (et plus spécialement parmi les oxydes et hydroxydes cériques) ou parmi les oxydes de titane et de fer obtenus, de préférence, par combustion.

Outre les constituants principaux A, B, C, D et les additifs précités, des composés organopolysiloxaniques particuliers peuvent être introduits dans le dessein d'agir sur les caractéristiques physiques des compositions conformes à l'invention et/ou sur les propriétés mécaniques des élastomères issus du durcissement de ces compositions.

Ces composés organopolysiloxaniques sont bien connus; ils comprennent plus spécialement:

(1f) des polymères:
$\alpha$ - $\omega$ bis(triorganosiloxy)diorganopolysiloxaniques et/ou $\alpha$ (hydroxy), (triorganosiloxy)diorganopolysiloxaniques, de viscosités d'au moins 10 mPa.s à 25°C, formés essentiellement de motifs diorganosiloxy et d'au plus 1 % de motifs monoorganosiloxy et/ou siloxy, les radicaux organiques liés aux atomes de silicfum étant choisis parmi les radicaux méthyles, vinyles, phényles, 60 % au moins de ces radicaux organiques étant des radicaux méthyles et 10 % au plus étant des radicaux vinyles.
La viscosité de ces polymères peut atteindre plusieurs dizaines de millions de mPa.s à 25°C; ils comprennent donc des huiles d'aspect fluide à visqueux et des gommes molles à dures. Ils sont préparés selon les techniques usuelles décrites plus précisément dans les brevets français 978 058, 1 025 150, 1 108 764, 1 370 884. On utilise de préférence les huiles $\alpha$-$\omega$-bis(triméthylsiloxy)diméthylpolysiloxaniques de viscosité allant de 10 mPa.s à 1000 mPa.s à 25°C. Ces polymères qui jouent le rôle de plastifiants peuvent être introduits à raison d'au plus 150 parties, de préférence de 5 à 120 parties, pour 100 parties des polymères $\alpha$-$\omega$-di(hydroxy) diorganopolysiloxaniques (A).

(2f) des polymères méthylpolysiloxaniques ramifiés, liquides, ayant de 1,4 à 1,9 radical méthyle par atome de silicium constitués d'une combinaison de motifs de formules:
$(CH_3)_3SiO_{0,5}$
$(CH_3)_2SiO$ et
$CH_3SiO_{1,5}$
ils renferment de 0, 1 à 8 % de groupes hydroxyles. Ils peuvent être obtenus par hydrolyse des chlorosilanes correspondants comme l'enseignent les brevets français 1 408 662 et 2 429 811. On utilise, de préférence, des polymères ramifiés dont les motifs sont répartis, selon les rapports suivants:
$(CH_3)_3SiO_{0,5}/(CH_3)_2SiO = 0,01$ à 0,15
et $CH_3SiO_{1,5}/(CH_3)_2SiO = 0,1$ à 1,5
Ces polymères peuvent être introduits à raison d'au plus 70 parties, de préférence de 3 à 50 parties, pour 100 parties des polymères $\alpha$-$\omega$-di(hydroxy)diorganopolysiloxaniques (A). Ils apportent les propriétés de thixotropie notamment avec les silices traitées.

(3f) des huiles diorganopolysiloxaniques bloquées par des groupes hydroxyles et/ou alcoxyles inférieurs ayant de 1 à 4 atomes de carbone, de faible viscosité en général comprise dans l'intervalle 2 mPa.s à 4 000 mPa.s à 25°C (si ces huiles sont bloquées uniquement par des groupes hydroxyles leur viscosité est inférieure à 700 mPa.s à 25°C); les radicaux organiques liés aux atomes de silicium de ces huiles sont, comme precédemment, choisis parmi les radicaux méthyles, vinyles phényles, 40 % au moins de ces radicaux étant des radicaux méthyles et 10 % au plus étant des radicaux vinyles. Comme groupes alcoxyles inférieurs bloqueurs de chaîne peuvent être cités les groupes méthoxyles, éthoxyles, isopropoxyles, n-propoxyles, n-butoxyles, isobutoxyles, tertiobutoxyles. Les taux en groupes hydroxyles et/ou alcoxyles s'étalent généralement de 0,5 à 20 %. Ces huiles sont préparées selon des techniques usuelles décrites plus précisément dans les brevets français 938 292, 1 104 674, 1 116 196, 1 278 281, 1 276 619. De préférence, on utilise des huiles $\alpha$-$\omega$-dihydroxydiméthylpolysiloxaniques de viscosité 10 à 300 mPa.s à 25°C, des huiles $\alpha$-$\omega$-dihydroxyméthylphénylpolysiloxaniques de viscosité 200 à 600 mPa s à 25°C et des huiles $\alpha$-$\omega$-diméthoxy (ou diéthoxy) diméthylpolysiloxaniques de viscosité 30 à 2 000 mPa.s à 25°C. Elles peuvent être introduites à raison d'au plus 50 parties, de préférence de 2 à 40 parties, pour 100 parties des polymères $\alpha$-$\omega$-di(hydroxy)diorganopolysiloxaniques (A). Ces huiles permettent de réduire la viscosité globale et sont considérées selon l'expression usuelle comme des "process aid."

(4f) des composés organosiliciques hydroxylés choisis parmi les composés répondant à la formule génerale

$Z'SiZ_2(OsiZ_2)_wOH$

qui sont solides à la température ambiante. Dans cette formule les svmboles Z, identiques ou différents, représentent des radicaux méthyles, éthyles, n-propyles, vinyles, phényles; le symbole Z' représente un radical hydroxyle où Z et le symbole w représente zéro, 1 ou 2. A titre d'exemples concrets de ces composés peuvent être cités: le diphénylsilanediol, le méthylphénylsilanediol, le diméthylphénylsilanol, le tétraméthyl-1,1,3,3 disiloxanediol, le diméthyl-1,3 diphényl-1,3 disiloxanediol, le tétraméthyl-1,1,5,5 diphényl-3,3 trisiloxanediol. Ils peuvent être introduits à raison d'au plus 30 parties, de préférence 0,5 à 20 parties, pour 100 parties des polymères α-ω-di(hydroxy)diorganopolysiloxaniques (A). Ils confèrent des propriétés thixotropantes au milieu qui en général se gélifie légèrement sous leur action. Les polymères α-ω-bis (triorganosiloxy)diorganopolysiloxaniques et/ou α-(hydroxy ω-(triorganosiloxy)diorganopolysiloxaniques décrits sous (1f) peuvent etre remplacés, totalement ou partiellement, par des composés organiques inertes vis-à-vis des constituants A, B, C, D et miscibles au moins avec les polymères α-ω-di(hydroxy)diorganopolysiloxaniques (A). Comme exemples de ces composés organiques peuvent être mentionnés les polyalcoylbenzènes obtenus par alcoylation du benzène à l'aide d'oléfines à longue chaîne, en particulier des oléfines à 12 atomes de carbone issues de la polymérisation du propylène. Des composés organiques de ce type figurent par exemple dans les brevets français 2 392 476 et 2 446 849.

Les compositions selon l'invention peuvent être éventuellement utilisées après dilution dans des composés organiques liquides; les diluants sont de préférence des produits usuels commercialisés choisis parmi:

- les hydrocarbures aliphatiques, cycloaliphatiques, aromatiques, halogénés ou non, tels que le n-heptane, le n-octane, le cyclohexane, le méthylcyclohexane, le toluène, le xylène, le mésitylène, le cumène, le tétraline, le perchloroéthylène, le trichloroéthane, le tétrachloroéthane, le chlorobenzène, l'orthodichlorobenzène,
- les cétones aliphatiques et cycloaliphatiques tels que la méthyléthylcétone, la méthylisobutylcétone, la cyclohexanone, l'isophorone,
- les esters tels que l'acétate d'éthyle, l'acétate de butyle, l'acétate d' éthylglycol

La préparation des compositions monocomposantes peut également avoir lieu en une seule ou 2 étapes. Selon cette dernière technique qui constitue un objet de la présente invention, les compositions sont tout d'abord préparées par mélange à l'abri de l'humidité des constituants A, B, D et éventuellement des additifs et adjuvants usuels. Elles sont stables au stockage et durcissent seulement par exposition à l'air humide. Il est bien évident que de telles compositions pourraient, le cas échéant, être utilisées seules et leur durcissement ou réticulation, se développerait alors à partir des surfaces en contact avec l'air ambiant et se poursuivrait progressivement vers l'intérieur de la masse. La durée de leur durcissement complet serait relativement lente et dépendrait principalement de l'épaisseur des couches déposées et du degré hygrométrique de l'atmosphère entourant les compositions. Il faudrait ainsi généralement une période de 24 heures à la température ambiante, avec un degré hygrométrique de 60 % pour réticuler correctement une couche de 4 mm d'épaisseur.

Ces compositions constituent la première composante d'une composition bi-composante conforme à l'invention, la 2ème composante étant constituée par l'accélérateur C.

Dans une deuxième étape, si on veut obtenir une composition monocomposante, on ajoute et homogénéise, à cette première composante, les accélérateurs de durcissement C en opérant à l'abri de l'air à température ambiante.

On obtient ainsi des compositions monocomposantes dont la stabilité à température ambiante à l'abri de l'humidité de l'air peut aller jusqu'à plusieurs mois, voire plus d'un an, selon la nature de l'accélérateur, la teneur en accélérateur et la température de stockage. Des températures de stockages inférieures à 40°C, de préférence inférieures à 25°C sont préférées.

Pour provoquer ou accélérer le durcissement de ces compositions, il suffit généralement de les soumettre à un traitement thermique à une température supérieure à 60°C, de préférence comprise entre 80 et 250°C, de façon plus précise encore entre 90 et 200°C.

Les compositions ainsi accélérées, conformes à l'invention, doivent alors être utilisées rapidement puisque leur durcissement, à l'opposé de celui des compositions monocomposantes classiques, se développe dans toute la masse. La durée de leur durcissement complet est très variable étant donné qu'elle dépend de la nature et des quantités mises en oeuvre des accélérateurs C, de la température du traitement thermique et de la durée de celui-ci.

En jouant sur ces divers paramètres il est possible d'obtenir des temps de durcissement s'échelonnant de quelques minutes à 60 minutes, ou plus. La température est un paramètre important; en effet, des variations de la valeur de la température ont des répercussions très nettes sur la vitesse de durcissement. Si la température augmente (les variations sont positives) la durée de durcissement est réduite; dans le cas contraire la durée est augmentée.

Bien entendu, la présente invention recouvre également les compositions bi-composantes ou l'accélérateur C est stocké à part de A, B, D et des additifs ou adjuvants usuels. Une telle présentation peut être avantageuse pour les applications où il faut adapter en permanence la teneur en accélérateur.

Un autre objet de la présente invention est constitué par l'utilisation des compositions à durcissement rapide pour l'obtention de joints.

Les compositions conformes à l'invention peuvent être employées pour de multiples applications comme le

jointoiement dans l'industrie du bâtiment, l'assemblage des matériaux les plus divers (métaux, matières plastiques, caoutchoucs naturels et synthétiques, bois, cartons, faïence, brique, céramique, verre, pierre, béton, éléments de maçonnerie), l'isolation de conducteurs électriques, l'enrobage de circuits électroniques, la préparation de moules servant à la fabrication d'objets en résines ou mousses synthétiques.

En outre, elles conviennent plus spécialement pour la formation de joints "in situ" utflisés dans l'industrie automobile. Ces joints "in situ" englobent plusieurs types, à savoir les joints "écrasés", les joints "en forme" et les joints "injectés".

Les joints "écrasés" sont formés à la suite de l'application d'un cordon pêteux des compositions sur la zone de contact entre 2 éléments métalliques à assembler. Le cordon pêteux est d'abord déposé sur l'un des éléments puis l'autre élément est aussitôt appliqué sur le premier; il en résulte un écrasement du cordon avant qu'il ne se transforme en élastomère. Ce type de joints s'adresse à des assemblages ne devant pas être couramment démontés (joints de carter d'huile, joints de carter de distribution ...).

Les joints "en forme" sont également obtenus à la suite de l'application d'un cordon pêteux des compositions sur la zone de contact entre 2 éléments à assembler. Toutefois, après la dépose du cordon pâteux sur l'un des éléments, on provoque le durcissement complet du cordon en élastomère, par exemple par chauffage, et à ce moment-là seulement on applique le deuxième élément sur le premier. Il en résulte qu'un tel assemblage est aisément démontable puisque l'élément qui est appliqué sur celui ayant reçu le joint, n'adhère pas à ce joint. Par ailleurs le joint, par son caractère caoutchouteux, épouse toutes les irrégularités des surfaces à jointoyer de ce fait, il est inutile (1) d'usiner soigneusement les surfaces métalliques devant être mises en contact les unes avec les autres et (2) de serrer avec force les assemblages obtenus; ces particularités permettent de supprimer dans une certaine mesure, des joints de fixation, des entretoises, des nervures destinées habituellement à raidir et renforcer les éléments des assemblages.

Comme les compositions conformes à l'invention peuvent durcir rapidement en prèsence ou en l'absence d'humidité, en milieu confiné, ou à l'air ambiant, il en résulte que les joints "en forme" (et aussi les autres joints "in situ") découlant du durcissement de ces compositions peuvent être fabriqués dans des conditions très contraignantes. Ils peuvent, par exemple, être fabriqués sur les chaînes de montage usuelles de l'industrie automobile munies d'un appareil automatique de dépose des compositions. Cet appareil automatique peut posséder une tête mélangeuse pour les compositions bi-composantes équipée d'une buse de dépose, celle-ci se déplaçant selon le profil des joints à fabriquer. La tête mélangeuse peut recevoir la composition polysiloxane comportant 1, accélérateur, elle peut disposer également d'une troisième entrée permettant d'introduire un solvant servant à rincer l'installation après usage (cyclohexane...). On peut alors provoquer la réticulation par un chauffage approprié du cordon ou du joint déposé.

Les compositions, fabriquées et distribuées au moyen de cet appareil doivent avoir une durée de durcissement bien ajustée pour d'une part éviter des prises en masse dans la tête mélangeuse et d'autre part obtenir une réticulation complète après la fin de la dépose du cordon pêteux sur les pièces à jointoyer. Conformément à l'invention on peut éviter cette prise en masse pour les compositions monocomposantes dont la tête mélangeuse et la buse d'extrusion sont maintenues à température ambiante. Ces joints "en forme" conviennent plus spécialement pour les joints de couvre-culbuteurs, de couvercles de boites à vitesses, d'entretoises de distribution et même de carters d'huile.

Les joints injectés dont la réticulation a été au préalable thermiquement provoquée sont formés en milieu confiné, dans des cavités souvent complètement closes; les compositions placées dans ces cavités se transforment rapidement en élastomères dont les propriétés sont identiques à celles d'élastoméres découlant du durcissement des compositions à l'air ambiant. Ces joints peuvent assurer par exemple l'étanchéité des paliers de vilbrequins.

Les compositions conformes à l'invention conviennent également pour la formation de joints à durcissement rapide dans d'autres domaines que l'automobile. Ainsi elles peuvent servir à coller et à jointoyer des armoires électriques en matière plastique, à produire des joints pour aspirateurs et pour fers à repasser à la vapeur.

Les élastomères issus du durcissement des compositions conformes à l'invention ont des propriétés mécaniques sensiblement analogues à celles des élastomères issus des compositions monocomposantes connues donc formées par simple mélange des constituants A, B, D et éventuellement d'additifs usuels sans l'introduction des accélérateurs C. En particulier, les déformations rémanentes à la compression (DRC) peuvent être relativement faibles, de l'ordre par exemple de 8 à 35 %. Le test de la DRC consiste à chauffer durant plusieurs heures (par exemple à 150°C) une éprouvette en élastomère maintenue sous compression diminuant sa hauteur de 30 % et à mesurer la déformation rémanente par la mesure en % de la diminution de l'éprouvette après le test. En outre, la réticulation complète mesurée par la dureté Shore A est obtenue dès la fin des temps de réticulation précédemment mentionnés lesquels s'étendent généralement de quelques minutes à 60 minutes, parfois plus mais jamais au-delà de 3 heures. Dans le cas des compositions monocomposantes, la réticulation complète demande dans les conditions les plus favorables, au moins une dizaine d'heures.

D'autres avantages et caractéristiques de la présente invention apparaîtront à la lecture des exemples suivants donnés à titre illustratif nullement limitatif.

**Exemple 1:**

On prépare une composition $G_1$ durcissant dès la température ambiante en élastomère en présence d'humidité de l'air par mélange des constituants suivants:

178 g: huile α-ω dihydroxypolydiméthylsiloxane de viscosité 20 000 mPa.s à 25° C,
534 g : huile α-ω dihydroxypolydiméthylsiloxane de viscosité de 3 500 mPa.s à 25 C,
93 g: silice de combustion de surface spécifique BET 300 $m^2/g$ traité par l'octaméthylcyclotétrasiloxane,
170 g: quartz broyé de diamétre particulaire moyen de 5 μm,
25 g: méthyltriacétoxysilane

On ajoute sous azote sec 90 g d'acide N,N'-éthylènebis maléamique de formule:

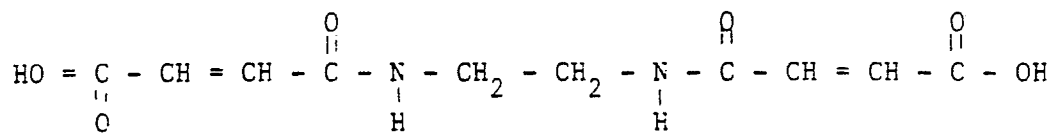

La compositions $H_1$ (ainsi obtenue) comportant l'accélérateur, stockée à température ambiante (20° C) en tube fermé, est stable au moins 6 mois tant qu'elle n'est pas en contact avec l'humidité de l'air.

A partir de $H_1$ on réalise des éprouvettes de 4 mm d'épaisseur sur des plaques en polyéthylène que l'on place dans une étuve chauffée à 150° C pendant 2 h. L'éprouvette est complètement réticulée et présente une dureté shore A maximale: 40.

**Exemple 2:**

A partir de 1000 g de $G_1$, préparée conformément à l'exemple 1 on ajoute 130 g d'acide N, N'-éthylène bis succinamique de formule:

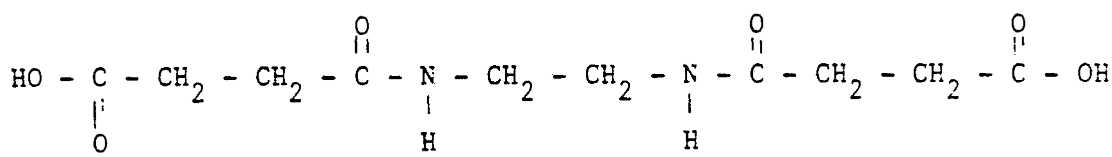

pour obtenir une composition $H_2$ stable au moins 6 mois à température ambiante quand elle est stockée en tube fernué. Des éprouvettes de 4 mm d'épaisseur réticulent, après mise en étuve à 100°C pendant 15 mn. L'élastomère obtenu contient des bulles d'air qui n'apparaissent pas si la composition $H_2$ est réticulée sous forme d'un revêtement de 1 mm d'epaisseur.

**Exemple 3:**

A 100 g de composition $G_1$, préparée à l'exemple 1 on ajoute 10 g d'un mélange $F_3$ formé de:

- 32 parties de sel de calcium monohydraté de l'acide N,N'-éthylène bis succinamique préalablement séché à 40° C sous un vide de 4 mbar (teneur en eau résiduelle de constitution 6,5 % par dosage de l'eau Karl Fischer) de formule:

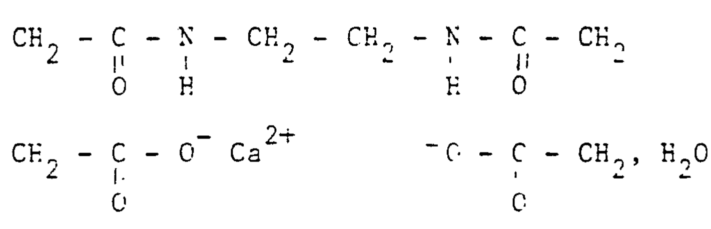

- 100 parties d'une huile α, ω - bis(triméthylsiloxy) polydiméthylsiloxane ayant une viscosité de 30 000 mPa.s à 25° C.

On obtient ainsi une composition $H_3$ stable environ 3 semaines à température ambiante en l'absence d'humidité.

Des éprouvettes de 4 mm placées pendant 5 mn à 150° C réticulent avec une dureté shore A de 40 bien que la température mesurée par un thermocouple au sein d'une éprouvette ne soit que de 120 - 130° C au bout de 5 mn d'étuve à 150° C.

On mesure sur les éprouvettes par compression de 30 % une DRC de 20 % après 3 jours à 150° C.

**Exemple 4:**

On utilise le même accélérateur qu'à l'exemple 3 sauf que le sel de calcium est séché sous un vide de 1,5 mbar pendant 15 h à 60 - 65° C. La molécule d'accélérateur ne contient pratiquement plus d'eau de constitution (teneur en eau résiduelle de 1,4 % par dosage Karl Fisher).

A 100 g de composition $G_1$, préparée à l'exemple 1, on ajoute 4,8 g de sel de calcium sous azote sec et la composition $H_4$ ainsi obtenue est mis dans des tubes fermés étanches à l'air.

On n'observe aucune réticulation dans ces tubes après plus de 6 mois de conservation à température ambiante. Quand on extrude la composition $H_4$ de ces tubes pour en faire des plaques de 4 mm d'épaisseur, on obtient une réticulation homogène sans bulles. Après 5 à 10 mn de passage en étuve à 150° C, on obtient un produit réticulé; mais on n'obtient une dureté finale maximale (dureté shore A : 40) qu'après 30 mn d'exposition à 150° C.

**Exemple 5:**

On prépare l'empêtage $I_1$ suivant:

- 92 g de polydiméthylsiloxane de viscosité d'environ $10^6$ mPa.s à 20° C,
- 8 g d'huile α-ω bis(triméthylsiloxy)polydiméthylsiloxane,
- 3 g de silice de combustion de surface spécifique/BET de 200 $m^2$/g,
- 5 g d'eau,
- 4,3 g d'oxyde de titane.

Puis, on prépare la composition $F_5$ suivante :

- 14 g d'huile α, ω bis(triméthylsiloxy) polydiméthylsiloxane de viscosité 30 000 mPa.s à 25° C,
- 4,8 g de sel de calcium utilisé à l'exemple 4,
- 0,25 g d'empêtage $I_1$.

On introduit sous azote sec la totalité de la composition $F_5$ dans 100 g de composition $G_1$ préparée à l'exemple 1 pour obtenir une composition $H_5$.

On extrude rapidement la composition $H_5$ pour réaliser des éprouvettes de 4 mm, composition qui réticule après 5 mn d'étuve à 150° C (dureté shore A = 25).

La dureté finale maximale (dureté shore A = 40) est obtenue après 10 à 15 mn d'exposition à 150° C.

**Revendications**

1. Composition organopolysiloxane pouvant réticuler en élastomère comportant un polysiloxane polyhydroxylé A, un polyacyloxysilane B et une quantité efficace d'un accélérateur de durcissement C, caractérisée en ce que l'accélérateur C répond à la formule:

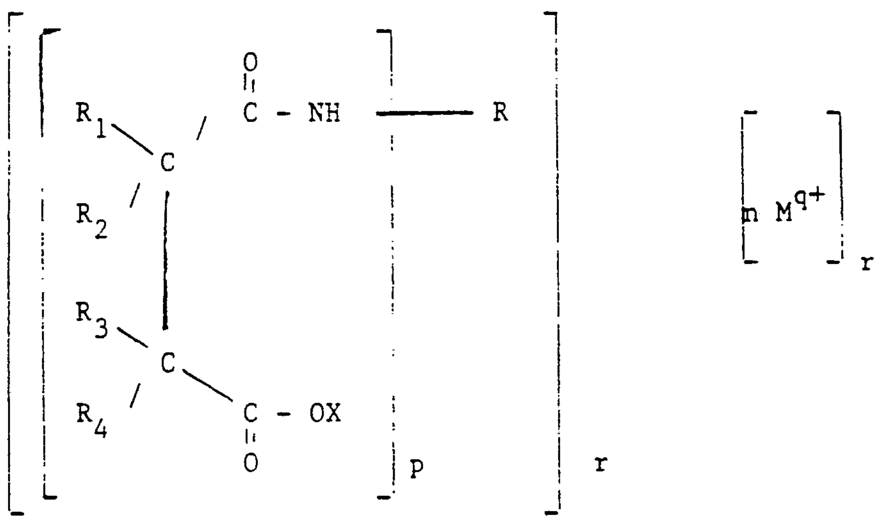

dans laquelle les divers symboles représentent:

- $R_1$, $R_2$, $R_3$, $R_4$: un atome d'hydrogène, un atome d'halogène, un groupement alkyle ou halogènoalkyle, alkoxyle, alkoxycarbonyle, hydroxyle, carbamoyle, ou carboxamide; les groupements $R_1$ et/ou $R_2$ pouvant constituer avec les groupements $R_3$ et/ou $R_4$ valentiel et/ou un groupement divalent constituant avec les deux atomes de carbone auxquels sont attachés les groupements $R_1$ (ou $R_2$) et $R_3$ (ou $R_4$) un groupement (L) pouvant comporter éventuellement un autre groupement carboxy-2 carboxamide, le groupement (L) étant cyclique ou polycyclique ou bien encore constitué par un ensemble de plusieurs groupements cycliques reliés entre eux par le lien valentiel, un hétéroatome, un groupement méthylène ou carboxyle,
- r: un nombre entier égal à 1 ou 2,
- p: un nombre entier égal à 1 ou 2 et représentant le nombre de valence du symbole R,
- R: le lien valentiel ou l'un des radicaux suivants:

a) un radical monovalent constitué par un atome d'hydrogène; un groupement $-CONHR_5$; $-CSNHR_5$, $R_5$ étant un atome d'hydrogène ou un radical alkyle; un radical hydrocarboné aliphatique, cycloaliphatique saturé ou insaturé; un radical aromatique; ces divers radicaux étant éventuellement substitués par des groupements alkyles eux mêmes éventuellement halogénés, par des atomes d'halogène, par des groupements carboxyliques ou nitrés ou encore par des groupements urée, thiourée ou hydroxyle,

b) un radical divalent alkylène, cycloalkylène, phénylène ou un ensemble de groupements alkylène ou phénylène reliés entre eux par un hétéroatome ou un groupement

-N-
|
$R_5$

$R_5$ représentant un atome d'hydrogène ou un groupement alkyle,

- M: un cation de valence q, de préférence alcalin ou alcalino-terreux,
- n: un nombre entier égal à 0, 1 ou 2 et telle que la charge ionique globale de l'accélérateur soit nulle ($n \times q = p$), si n = 0, X représente l'atome d'hydrogène et si n est différent de 0, X représente une charge négative.

2. Composition selon la revendication 1, caractérisée en ce que le cation M de l'accélérateur C est choisi parmi le calcium, le lithium, le baryum et le strontium.

3. Composition selon l'une quelconque des revendications précédentes, caractérisé en ce que l'accélérateur C est sous une forme mono ou polyhydratée.

4. Composition selon l'une quelconque des revendications précédentes, caractérisée en ce qu'elle comporte:

- 100 parties de polymères A principalement α - ω di(hydroxy)diorganopolysiloxaniques, de viscosité 700 à 1 000 000 mPa.s à 25°C, constitués chacun d'une succession de motifs diorganosiloxy de formule $R_2SiO$ dans laquelle les symboles R, identiques ou différents, représentent des radicaux hydrocarbonés ayant de 1 à 8 atomes de carbone, substitués ou non par des atomes d'halogènes, de groupes cyano.
- 2 à 20 parties d'agents réticulants B de formule générale $R_pSi(OCOR')_{4-p}$ dans laquelle le symbole R a la signification donnée sous (A), le symbole R', représente un radical hydrocarboné exempt d'insaturation aliphatique, ayant de 1 à 15 atomes de carbone et le symbole p représente zéro ou un,
- 0,01 à 30, de préférence 0,5 à 15 parties, pour 100 parties de A + B + C, d'accélérateur de durcissement C

5. Composition selon la revendication 4, caractérisée en ce qu'elle comporte en outre de 1 à 150 parties d'une charge minérale D pour 100 parties de constituant A.

6. Composition selon l'une quelconque des revendications précédentes, caractérisée en ce que l'accélérateur de durcissement est choisi parmi l'acide N,N'-éthylène bis maléamique et l'acide N,N'-éthylène

bis succinamique.

7. Composition selon l'une quelconque des revendications précédentes caractérisée en ce que les constituants A et B sont remplacés par les produits dévolatilisés provenant de la réaction stoechiométrique de A sur B.

8. Composition selon l'une quelconque des revendications 1 à 7, caractérisée en ce qu'elle se présente sous la forme d'une composition monocomposante stable au stockage à température ambiante à l'abri de humidité de l'air.

9. Composition selon l'une quelconque des revendications 1 à 7, caractérisée en ce qu'elle se présente sous la forme d'une composition bicomposante, une composante étant constituée par l'accélérateur C.

10. Procédé pour l'obtention d'une composition telle que définie à la revendication 8, caractérisé en ce qu'on prépare d'une part une composition monocomposante par mélange à l'abri de l'humidité des constituants A, B et éventuellement D ainsi que des additifs et adjuvants usuels, et d'autre part un accélérateur C puis on y ajoute et homogénéise les constituants A, B et C afin d'obtenir une composition à un seul emballage stable au stockage à température ambiante.

11. Procédé pour l'obtention d'une composition telle que définie à la revendication 9, caractéris'e en ce qu on prépare d'une part une composition monocomposante par mélange à l'abri de l'humidité des constituants A, B et éventuellement D ainsi que des additifs et adjuvants usuels, puis on y ajoute et homogénéise au moment de l'emploi l'accélérateur de durcissement.

12. Procédé pour réticuler une composition telle que définie à l'une quelconque des revendications 1 à 9, caractérisé en ce qu'on chauffe ladite composition pour engendrer de l'eau de déshydratation et/ou de l'hydroxyde du cation M provenant de la dégradation de l'accélérateur C.

13. Utilisation de compositions selon l'une quelconque des revendications 1 à 9 pour l'obtention de joints.

## Patentansprüche

1. Organopolysiloxanzusammensetzung, die zu einem Elastomeren vernetzen kann, enthaltend ein Polyhydroxyliertes Polysiloxan A, ein Polyacyloxysilan B und eine wirksame Menge eines Härtungsbeschleunigers C, dadurch gekennzeichnet, daß der Beschleuniger C der Formel:

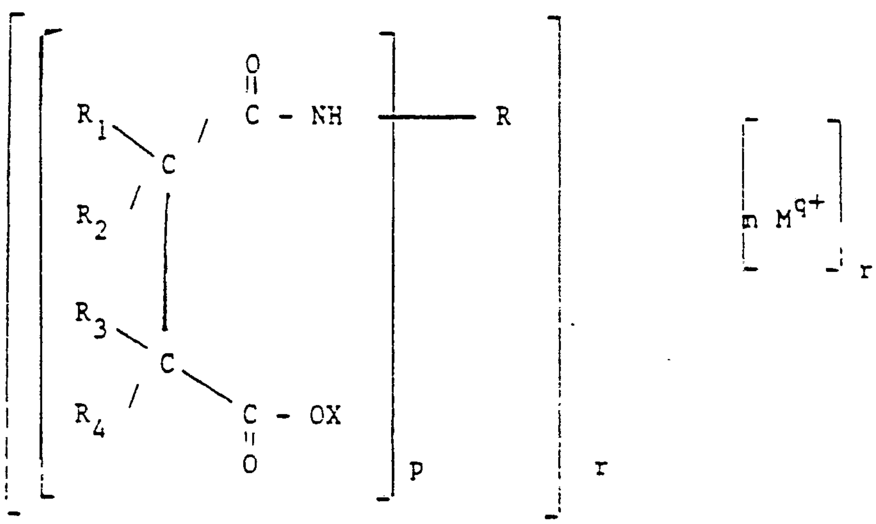

entspricht, worin die verschiedenen Symbole bedeuten:

- $R_1$, $R_2$, $R_3$, $R_4$: ein Wasserstoffatom, ein Halogenatom, eine Alkyl- oder Halogenalkylgruppe, Alkoxyl-, Alkoxycarbonyl-, Hydroxyl-, Carbamoyl- oder Carboxamidgruppe; die Gruppen $R_1$ und/oder $R_2$ können mit den Gruppen $R_3$ und/oder $R_4$ eine Valenzbindung und/oder eine zweiwertige Gruppe darstellen, die mit den beiden Kohlenstoffatomen, an die die Gruppen $R_1$ (oder $R_2$) und $R_3$ (oder $R_4$) gebunden sind, eine Gruppe (L) bilden, die gegebenenfalls eine andere 2-Carboxycarboxamidgruppe tragen kann, wobei die Gruppierung (L) cyclisch oder polycyclisch ist oder auch aus einer Einheit von mehreren cyclischen Gruppierungen besteht, die untereinander durch die Valenzbindung, ein Heteroatom, eine Methylengruppe oder Carboxyl verbunden sind,

- r: eine ganze Zahl gleich 1 oder 2,
- p: eine ganze Zahl gleich 1 oder 2 und bedeutet die Valenzzahl des Symbols R,
- R: die Valzenzbindung oder einer der folgenden Reste:

a) ein einwertiger Rest, bestehend aus einem Wasserstoffatom; eine Gruppierung $-CONHR_5$; $-CSNHR_5$ wobei $R_5$ ein Wasserstoffatom oder ein Alkylrest ist; ein aliphatischer, cycloaliphatischer gesättigter oder ungesättigter Kohlenwasserstoffrest; ein aromatischer Rest; wobei diese verschiedenen Reste gegebenenfalls

durch Alkylgruppen substituiert sind, die ihrerseits gegebenenfalls halogeniert sind; aus Halogenatomen, aus Carboxylgruppen oder nitrierten Gruppen oder auch aus Harnstoff-, Thioharnstoff- oder Hydroxylgruppen,

b) ein zweiwertiger Alkylen-, Cycloalkylen-, Phenylenrest oder eine Einheit von Alkylen- oder Phenylengruppen, die untereinander durch ein Heteroatom oder eine Gruppierung

-N-
|
$R_5$

verbunden sind, wobei $R_5$ ein Wasserstoffatom oder eine Alkylgruppe bedeutet,

- M: ein Kation mit der Valzenz q, vorzugsweise Alkali oder Erdalkali,

- n: eine ganze Zahl gleich 0, 1 oder 2 und derart, daß die gesamtionische Ladung des Beschleunigers Null ist ($n \times q = p$), wehn $n = 0$, X das Wasserstoffatom bedeutet, und wenn n verschieden von 0 ist, so bedeutet X eine negative Ladung.

2. Zusammensetzung gemäß Anspruch 1, dadurch gekennzeichnet, daß das Kation M des Beschleunigers C ausgewählt ist unter Calcium, Lithium, Barium und Strontium.

3. Zusammensetzung gemäß einem der vorhergehenden Ansprüche, dadurch gekennzeichnet, daß der Beschleuniger C unter einer mono- oder polyhydratisierten Form vorliegt.

4. Zusammensetzung gemäß einem der vorhergehenden Ansprüche, dadurch gekennzeichnet, daß sie enthält:

- 100 Teile Polymere A, hauptsächlich α-ω-Di(hydroxy)-diorganopolysiloxane der Viskosität 700 bis 1000000 mPa.s bei 25°C, wobei sie jeweils aus einer Folge von Diorganosiloxygruppierungen der Formel $R_2SiO$ bestehen, worin die Symbole R, die identisch oder verschieden sind, Kohlenwasserstoffreste mit 1 bis 8 Kohlenstoffatomen bedeuten, die substituiert oder nicht substituiert sind durch Halogenatome oder Cyanogruppen,

- 2 bis 20 Teile Vernetzungsmittel B der allgemeinen Formel $R_pSi(OCOR')_{4-p}$ worin das Symbol R die unter A angegebene Bedeutung hat, das Symbol R' einen Kohlenwasserstoffrest, frei von aliphatischer Unsättigung, mit 1 bis 15 Kohlenstoffatomen bedeutet und das Symbol p Null oder Eins bedeutet,

- 0,01 bis 30, vorzugsweise 0,5 bis 15, Teile des Härtungsbeschleunigers C pro 100 Teile von A + B + C.

5. Zusammensetzung gemäß Anspruch 4, dadurch gekennzeichnet, daß sie außerdem 1 bis 150 Teile eines mineralischen Füllstoffs D pro 100 Teile des Bestandteils A enthält.

6. Zusammensetzung gemäß einem der vorhergehenden Ansprüche, dadurch gekennzeichnet, daß der Härtungsbeschleuniger ausgewählt ist unter der N,N'-Ethylen-bis-maleamidsäure und der N,N'-Ethylen-bis-succinamidsäure.

7. Zusammensetzung gemäß einem der vorhergehenden Ansprüche, dadurch gekennzeichnet, daß die Bestandteile A und B ersetzt sind durch die von flüchtigen Stoffen befreiten Produkte, stammend von der stöchiometrischen Reaktion von A auf B.

8. Zusammensetzung gemäß einem der Ansprüche 1 bis 7, dadurch gekennzeichnet, daß sie in Form einer Einkomponentenzusammensetzung vorliegt, die bei Umgebungstemperatur und unter Ausschluß von Luftfeuchtigkeit lagerbeständig ist.

9. Zusammensetzung gemäß einem der Ansprüche 1 bis 7, dadurch gekennzeichnet, daß sie in Form einer Bicomponentemzusammensetzung vorliegt, wobei ein Bestandteil aus dem Beschleuniger C besteht.

10. Verfahren zur Erzielung einer Zusammensetzung, wie in Anspruch B definiert, dadurch gekennzeichnet, daß man einerseits eine Einkomponentenzusammensetzung durch Vermischen - unter Feuchtigkeitsausschluß - der Bestandteile A, B und gegebenenfalls 0 sowie üblichen Zusätzen und Hilfsmitteln herstellt, und andererseits einen Beschleuniger C herstellt und dann die Bestandteile A, B und C dazugibt und homogenisiert, um eine Zusammensetzung mit einer einzigen Verpackung zu erhalten, die bei Umgebungstemperatur lagerbeständig ist.

11. Verfahren zur Herstellung einer Zusammensetzung, wie sie in Anspruch 9 definiert ist, dadurch gekennzeichnet, daß man einerseits eine Einkomponentenzusammensetzung durch Vermischen - unter Feuchtigkeitsausschluß - der Bestandteile A, B und gegebenenfalls D sowie üblicher Zusätze und Hilfsmittel herstellt, und dann im Augenblick der Verwendung den Härtungsbeschleuniger zusetzt und homogenisiert.

12. Verfahren zum Vernetzen einer Verbindung, wie sie in einem der Ansprüche 1 bis 9 definiert ist, dadurch gekennzeichnet, daß man diese Zusammensetzung erhitzt, um Dehydradationswasser und/oder Hydroxid des Kations M, das von dem Abbau des Beschleunigers C herrührt, zu erzeugen.

13. Verwendung der Zusammensetzungen gemäß einem der Ansprüche 1 bis 9 zur Herstellung von Dichtungen.

**Claims**

1. Organopolysiloxane composition capable of cross-linking to an elastomer comprising a polyhydroxylated Polysiloxane A, a polyacyloxysilane B and an effective quantity of a cure accelerator C, characterized in that the accelerator C corresponds to the formula:

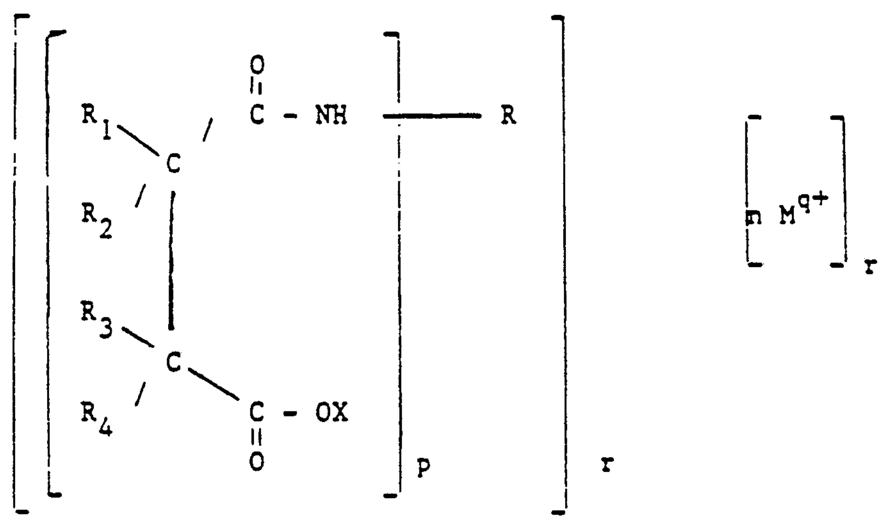

in which the various symbols denote:

- $R_1$, $R_2$, $R_3$, $R_4$: a hydrogen atom, a halogen atom, an alkyl or haloalkyl, alkoxy, alkoxycarbonyl, hydroxyl, carbamoyl or carboxamide group, it being possible for the groups $R_1$ and/or $R_2$ to form, with the groups $R_3$ and/or $R_4$, a valency bond and/or a divalent group forming, with the two carbon atoms to which the groups $R_1$ (or $R_2$) and $R_3$ (or $R_4$) are attached, a group (L) which may optionally comprise another 2-carboxycarboxamide group, the group (L) being cyclic or polycyclic or else consisting of an assembly of several cyclic groups joined together by the valency bond, a heteroatom, or a methylene or carboxyl group,
- r: an integer equal to 1 or 2,
- p: an integer equal to 1 or 2 and denoting the valency number of the symbol R,
- R: the valency bond or one of the following radicals:

a) a monovalent radical consisting of a hydrogen atom; a $-CONHR_5$ group; $-CSNHR_5$, $R_5$ being a hydrogen atom or an alkyl radical; a saturated or unsaturated aliphatic or cycloaliphatic hydrocarbon radical; an aromatic radical; these various radicals being optionally substituted by alkyl groups, themselves optionally halogenated, by halogen atoms, by carboxylic or nitro groups or, further, by urea, thiourea or hydroxyl groups,

b) an alkylene, cycloalkylene or phenylene divalent radical or an assembly of alkylene or phenylene groups linked together by a heteroatom or a

-N- group
 |
$R_5$

$R_5$ denoting a hydrogen atom or an alkyl group,

- M: a cation of valency q, preferably alkali metal or alkaline-earth metal,
- n: an integer equal to 0, 1 or 2 and such that the overall ioniccharge of the accelerator is zero ($n \times q = p$), if $n = 0$, X denotes the hydrogen atom and if n is other than 0, X denotes a negative charge.

2. Composition according to Claim 1, characterized in that the cation M of the accelerator C is chosen from calcium, lithium, barium and strontium.

3. Composition according to either of the preceding claims, characterized in that the accelerator C is in a mono- or polyhydrated form.

4. Composition according to any one of the preceding claims, characterized in that it comprises:

100 parts of chiefly α,ω-di(hydroxy)diorganopolysiloxane polymers A with a viscosity of 700 to 1 000 000 mPa.s at 25°C, each consisting of a succession of diorganosiloxy units of formula $R_2SiO$ in which the symbols R, which are identical or different, denote hydrocarbon radicals containing from 1 to 8 carbon atoms, substituted or unsubstituted by halogen atoms or cyano groups.

- 2 to 20 parts of cross-linking agents B of general formula $R_pSi(OCOR')_{4-p}$ in which the symbol R has the meaning given under (A), the symbol R' denotes a hydrocarbon radical free from aliphatic unsaturation, containing from 1 to 15 carbon atoms, and the symbol p denotes zero or one,
- 0.01 to 30, preferably 0.5 to 15 parts of cure accelerator C per 100 parts of A + B + C.

5. Composition according to Claim 4, characterized in that it additionally comprises from 1 to 150 parts of an inorganic filler D per 100 parts of constituent A.

6. Composition according to any one of the preceding claims, characterized in that the cure accelerator is chosen from N,N'-ethylenebismaleamic acid and N,N'ethylenebissuccinamic acid.

7. Composition according to any one of the preceding claims, characterized in that the constituents A and B are replaced by the devolatilized products originating from the stoichiometric reaction of A with B.

8. Composition according to any one of Claims 1 to 7, characterized in that it is in the form of a single-component composition stable in storage at ambient temperature in the absence of atmospheric moisture.

9. Composition according to any one of Claims 1 to 7, characterized in that it is in the form of a two-component composition, one component consisting of the accelerator C.

10. Process for obtaining a composition such as defined in Claim 8, characterized in that there is prepared, on the one hand, a single-component composition, by mixing, in the absence of moisture, the constituents A, B and optionally D, together with usual additives and adjuvants and, on the other hand, an accelerator C, and the constituents A, B and C are then added thereto and homogenized in order to obtain a single-pack composition which is stable in storage at ambient temperature.

11. Process for obtaining a composition such as defined in Claim 9, characterized in that, on the one hand, a single-component composition is prepared by mixing, in the absence of moisture, the constituents A, B and optionally D, together with usual additives and adjuvants, and the cure accelerator is then added thereto and homogenized at the time of use.

12. Process for cross-linking a composition such as defined in any one of Claims 1 to 9, characterized in that the said composition is heated to generate water of dehydration and/or the hydroxide of the cation M originating from the decomposition of the accelerator C.

13. Use of compositions according to any one of Claims 1 to 9 for producing seals.